# EUROPEAN PATENT APPLICATION

(11) **EP 4 046 495 A1**
(43) Date of publication of application: **24.08.2022**
(21) Application number: 21217775.2
(22) Date of filing: 27.12.2021
(51) Int. Cl.: A23C 19/06, A23C 19/084, A23C 19/09, A23C 19/14, A23L 27/10, A23C 19/16, A01J 27/04, A23L 27/00

(54) **METHOD OF MANUFACTURING FLAVORED CHEESE AND A FLAVORED CHEESE STACK**

(30) Priority: 23.02.2021 NL 2027620
(71) Applicant: Wijngaard Kaas B.V., 3446 CP Woerden (NL)
(72) Inventor: VAN DEN WIJNGAARD, Marinus, 3446 CP WOERDEN (NL)
(74) Representative: Van Breda, Jacobus

(57) **Abstract**

The invention relates to flavored cheese and a method of manufacturing thereof. A standard cheese is selected based on its maturity level and sliced into cheese segments. Next, heat is applied to partially melt the cheese segments and add a flavoring component. A stack of partially melted and flavored cheese segments is then vacuumed and cooled to form a solid unitary stack of flavored cheese. Thereafter the unitary stack may be sliced.

## Description

The invention relates to a flavored cheese stack and a method of manufacturing thereof.

JP 2017 108699 discloses a method of manufacturing flavored cheese, comprising the steps of 1. melting unflavored cheese (1), 2. supplying an additive to the at least in part solidified molten cheese (1), 3. slicing the cheese (1) into cheese segments (2), and 4. stacking the cheese segments. After the cheese is molten it is first solidified, and then reheated again to get a charred crust on the surface of the cheese. Optionally before reheating a liquid containing saccharides is supplied to the surface of the cheese. After the reheating step, the cheese is sliced and stacked.

JP HO6 38679 discloses a 'tangle cheese' in which the flavor of the tangle is harmonized with that of the cheese and in which the defective nutrition values of both the tangle and the cheese are reinforced with each other, by slicing the tangle into thin sheets, nipping and attaching a sliced cheese between and to the tangle sheets, and subsequently tightly bonding both the materials by the application of a weight.

DE 10 2009 018737 discloses a method for aromatizing food such as cheese, comprises arranging aroma substances and/or herbs in an aroma layer, flatly covering the aroma layer with a separating means, and arranging a food on the separating means in a food layer.

US 4,588,597 proposes a rolled cheese and a process for making the cheese. The cheese comprises a layer of fresh cheese curd coated with flavoring such as herbs, which is rolled into a spiral. The fresh cheese curd is neither cooked nor kneaded, and the resulting rolled cheese has two distinct layers which each contain a distinctive taste.

US2007/202236 discloses a sliced, flavored cheese product and methods of flavoring cheese in which individual slices of cheese are separated by an interleaf paper barrier that includes a flavoring component, such as smoke flavor, applied to at least one of the two surfaces thereof. By placing each cheese slice in contact with the flavored interleaf paper, and packaging the cheese slices in a conventional manner, the cheese slices therein are imparted with the flavoring component, thereby providing a flavored cheese slice.

US 3,993,786 discloses method of providing cheese slices that do not adhere together wherein a composition of matter is used consisting of a fat material in powder form applied to one or both sides of each cheese slice.

Standard cheese is a natural product made by curdling milk with an acid (vinegar, lemon juice) or rennet. The process of cheese ripening affects the taste of the final product. If the product is not ripened, the resulting cheese is tasteless. Such a tasteless cheese is known from Germany as so-called foil-cheese. It is known to manufacture flavored cheese by adding flavoring herbs into the milk during the curdling process. The presence of flavoring herbs in the milk curd makes it very cumbersome to guarantee the ripening time, and therefore, very cumbersome to guarantee the desired cheese taste.

Additionally, flavored cheese is a niche product, meaning that in comparison with standard cheese, the sales of flavored cheese are limited. Nevertheless, the minimal ordering quantity of flavored cheese at the factories is usually around 1200 kilograms, which is disproportionately higher than the market demand. It is, therefore, usually required to store the flavored cheese for a relatively long period of time. During the storing period, the taste of flavored cheese manufactured with the known methods continues to develop and change over time, except with the abovementioned German foil-cheese. With limited sales it becomes therefore difficult to guarantee the quality of flavored cheese in retail, and most of the stock goes to waste. It is for that particular reason that flavored cheese has a limited availability in retail.

It is an object of the invention to provide a solution for the aforementioned problems.

The invention therefore proposes a method in accordance with one or more of the appended claims.

According to a first aspect of the invention a method of manufacturing flavored cheese is proposed, comprising the steps of 1. melting unflavored cheese, 2. supplying an additive to the at least in part solidified molten cheese, 3. slicing the cheese into cheese segments, and 4. stacking the cheese segments, wherein as additive a flavoring component is selected which is supplied to the cheese before the cheese is completely solidified while avoiding reheating of the cheese so as to arrange that the flavoring component will attach to the cheese and will maintain its natural flavoring properties.

Put differently, the invention proposes a method of manufacturing flavored cheese, comprising the steps of 1. melting unflavored cheese, 2. supplying an additive to the at least in part solidified molten cheese, 3. slicing the cheese into cheese segments, and d. stacking the cheese segments, wherein:
a. dividing said cheese into cheese segments is executed before applying heat to the cheese;
b. applying heat onto the cheese segments is applied after dividing the cheese into cheese segments so as to convert the cheese segments into at least in part molten cheese segments;
c. followed by adding the at least one flavoring component to the at least in part molten cheese segments to provide flavored cheese segments;
d. and thereafter forming a stack of the flavored cheese segments;
e. vacuuming, heating and subsequently cooling the stack of cheese segments; and
f. optionally further processing the stack of cheese segments into consumer packs of flavored cheese.

Advantageously the crust is removed from the cheese prior to the slicing of said cheese in step a.

Advantageous results can be achieved when step a of dividing the cheese provides cheese segments with a width of 0.1 to 5 centimeters. However, other widths are also possible.

Suitably the step of applying heat onto the cheese segments can be carried out by placing said cheese segments on a heating plate. Alternatively external heating lamps can be used for heating the cheese segments.

The step of adding a flavoring component is preferably carried out by placing said heated cheese segments on a bed of herbs that stick then to the heated cheese segments to provide flavored cheese segments. Alternatively this can also be done by spraying the cheese segments with aromatic components.

Preferably the step of forming the stack of flavored cheese segments comprises stacking the cheese segments, wherein each flavored side of any cheese segment is placed adjacent to an non-flavored side of a neighboring cheese segment. It is however also possible to provide both sides of the cheese segment with a flavoring component, so that a flavored side of one cheese segment is adjacent to a flavored side of another cheese segment.

The step of forming a stack of the flavored cheese segments comprises placing the stack of cheese in an underpressurized or vacumized recipient, preferably a shrinkwrap foil.

Desirably the stack of flavored cheese segments provided in the underpressurized or vacumized recipient is subjected to heat treatment at a temperature between 80 and 100 degrees Celsius during a period between 1 and 5 seconds. This can be achieved either by simply placing said recipient into a bath of hot water or in a dry-air oven.

Suitably the method comprises the step of cooling the stack of flavored cheese segments whilst being placed in the underpressurized or vacumized recipient, for a period of at least one week, preferably two weeks. Degrading the cheese quality is therewith avoided. Advantageously, the step of cooling the stack of flavored cheese segments comprises cooling at a temperature below 7 degrees Celsius.

Thereafter the stack of cheese segments is removed from the recipient and subsequently sliced into flavored cheese segments.

It is preferred that the flavored cheese segments are packaged in a consumer pack, vacumized and provided with a conservative gas.

The invention is also embodied in a cheese stack that comprises at least two flavored cheese segments, obtained from standard cheese which is heated, flavored, stacked and cooled to form a solid unitary cheese stack as manufactured with the above discussed method of manufacturing.

The invention will hereinafter be further elucidated with reference to the drawing of an exemplary embodiment of manufacturing a flavored cheese according to the invention that is not limiting as to the appended claims.

In the drawing:
- figure 1 shows a selected unflavored cheese and cheese segments obtained therefrom;
- figure 2 shows heating and flavoring of the cheese segments of figure 1 to obtain flavored and heated cheese segments;
- figure 3 shows stacking and foil wrapping of the stack of flavored heat segments;
- figure 4 shows a solid unitary stack after cooling and flavored cheese segments obtained therefrom; and
- figure 5 shows the flavored cheese segments provided into a consumer pack, which is vacumized and containing a conservative gas.

Whenever in the figures the same reference numerals are applied, these numerals refer to the same parts.

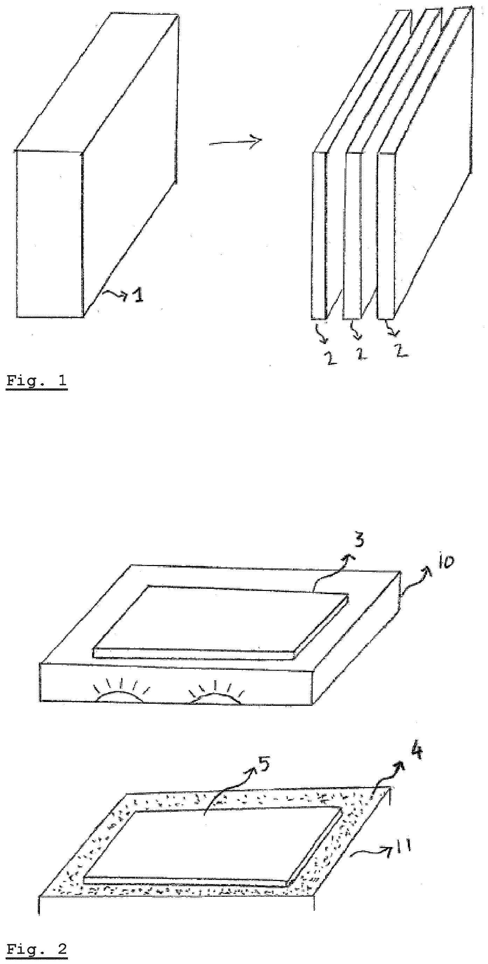

According to the method of the invention figure 1 shows an unflavored cheese 1 which is selected based on its maturity level, and sliced into cheese segments 2 with a width preferably between 0.1 and 5 centimeters.

The cheese segments 2 are then preferably put on a heating plate 10 as shown in the upper part of figure 2 so as to provide in part molten cheese segments 3.

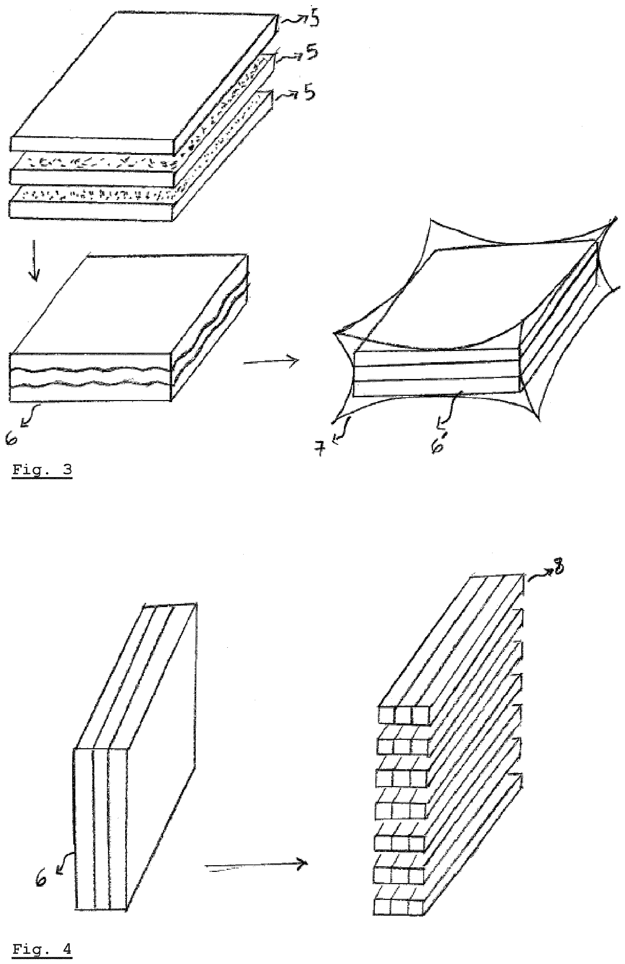

Next, the lower part of figure 2 shows that the in part molten cheese segments 3 are placed on a bed 11 of herbs 4 to convert the molten cheese segments 3 into flavored cheese segments 5. As shown in figure 3, the flavored cheese segments 5 are then stacked into a stack 6 of flavored cheese segments 5, wherein each flavored side of any cheese slice 5 is placed adjacent to an non-flavored side of a neighboring cheese slice 5. As mentioned above this is not essential, but represents a typical way of carrying out the invention.

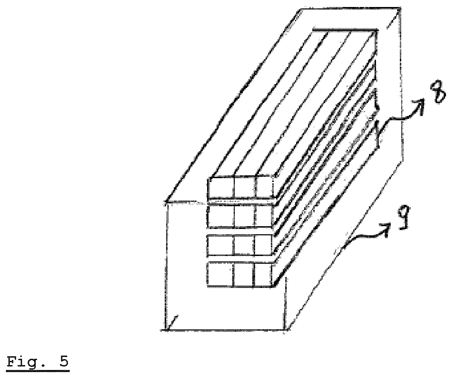

Then the stack 6 of the flavored cheese segments 5 is placed in an underpressurized or vacumized recipient, preferably a shrinkwrap foil 7. The flavored cheese segments 5 of the stack 6 are thus tightly held together by the vacuum created inside the recipient 7. The stack of cheese in the recipient is then heated at a temperature between 80 and 100 degrees Celsius to further consolidate the flavored cheese segments 5 together. This consolidation is further strengthened by a subsequent cooling of the stack 6 for at least one week, but preferably two weeks, to a temperature below 7 degrees Celsius. The resulting stack 6 of flavored cheese that can thereafter be stored for a longer period of time without risking any deterioration of the taste of the flavored cheese. When retail places an order, the solid unitary stack 6 of cheese can be taken out of storage and sliced as shown in figure 4 into flavored cheese slices or segments 8, and subsequently placed in a consumer pack 9, which is vacumized and provided with a conservative gas as depicted in figure 5.

Although the invention has been discussed in the foregoing with reference to an exemplary embodiment of the method of the invention, the invention is not restricted to this particular embodiment which can be varied in many ways without departing from the invention. The discussed exemplary embodiment shall therefore not be used to construe the appended claims strictly in accordance therewith. On the contrary the embodiment is merely intended to explain the wording of the appended claims without intent to limit the claims to this exemplary embodiment. The scope of protection of the invention shall therefore be construed in accordance with the appended claims only, wherein a possible ambiguity in the wording of the claims shall be resolved using this exemplary embodiment.

## Claims

1. Method of manufacturing flavored cheese, comprising the steps of 1. melting unflavored cheese (1), 2. supplying an additive to the at least in part solidified molten cheese (1), 3. slicing the cheese (1) into cheese segments (2), and 4. stacking the cheese segments (2), **characterized by** selecting as additive a flavoring component (4) which is supplied to the cheese (1) before the cheese (1) is completely solidified while avoiding reheating of the cheese (1) prior to stacking of the cheese segments (2) so as to arrange that the flavoring component (4) will attach to the cheese (1) and will maintain its natural flavoring properties.

2. Method according to claim 1 or the preamble of claim 1, wherein:
a. dividing said cheese into cheese segments (2) is executed before applying heat to the cheese;
b. applying heat onto the cheese segments (2) is applied after dividing the cheese into cheese segments (2) so as to convert the cheese segments (2) into at least in part molten cheese segments (3);
c. followed by adding the at least one flavoring component (4) to the at least in part molten cheese segments (3) to provide flavored cheese segments (5);
d. and thereafter forming a stack (6) of the flavored cheese segments (5);
e. vacuuming, heating and subsequently cooling the stack (6) of cheese segments (5); and
f. optionally further processing the stack (6) of cheese segments (5) into consumer packs of flavored cheese (8).

3. Method for manufacturing flavored cheese according to claim 1 or 2, **characterized in that** the method comprises the step of removing a crust from the cheese (1) prior to dividing of said cheese (1) into cheese segments (2).

4. Method for manufacturing flavored cheese according to any one of claims 1 - 3, **characterized in that** the step b of dividing the cheese (1) provides cheese segments (2) with a width of 0.1 to 5 centimeters.

5. Method for manufacturing flavored cheese according to any one of claims 1 - 4, **characterized in that** the step of applying heat onto the cheese segments (2) comprises subjecting said cheese segments (2) to an external heat source, such as by placing the cheese segments (2) on a heating plate (10).

6. Method for manufacturing flavored cheese according to any one of claims 1 - 5, **characterized in that** the step of adding a flavoring component (4) to the at least in part molten cheese segments (3) comprises spraying herbs on the at least in part molten cheese segments (3), or placing said cheese segments (3) on a bed (11) of herbs (4) to provide flavored cheese segments (5).

7. Method for manufacturing flavored cheese according to any one of claims 1 - 6, **characterized in that** the step of forming the stack (6) of flavored cheese segments (5) comprises stacking the cheese segments (5).

8. Method for manufacturing flavored cheese according to claim 7, **characterized in that** wherein each flavored side of any cheese segment (5) is placed adjacent to an non-flavored side of a neighboring cheese segment (5).

9. Method for manufacturing flavored cheese according to claim 7, **characterized in that** wherein each flavored side of one cheese segment (5) is adjacent to a flavored side of another cheese segment (5).

10. Method for manufacturing flavored cheese according to any one of claims 1 - 9, **characterized in that** the step of forming the stack (6) of flavored cheese segments (5) comprises placing said stack (6) of flavored cheese segments (5) in an underpressurized or vacumized recipient, preferably a shrinkwrap foil (7).

11. Method for manufacturing flavored cheese according to claim 10, **characterized in that** the stack (6) of flavored cheese segments (5) provided in the underpressurized or vacumized recipient is subjected to heat treatment at a temperature between 80 and 100 degrees Celsius during a period between 1 and 5 seconds.

12. Method for manufacturing flavored cheese according to any one of claims 10 - 11, **characterized in that** the method comprises the step of cooling the stack (6) of flavored cheese segments (5) whilst being placed in the underpressurized or vacumized recipient, for a period of at least one week, preferably two weeks.

13. Method for manufacturing flavored cheese according to any one of claims 10 - 12, **characterized in that** the stack (6) of cheese segments (5) is removed from the recipient (7) and subsequently divided into flavored cheese slices or segments (8).

14. Method for manufacturing flavored cheese according to claim 13, **characterized in that** the flavored cheese segments (8) are packaged in a consumer pack (9), vacumized and provided with a conservative gas.

15. Cheese stack (6), **characterized in that** said cheese stack (6) comprises at least two flavored cheese segments (5), obtained from standard cheese which is heated, flavored and stacked, and cooled to form a solid unitary cheese stack (6) manufactured with the method according to any one of claims 1 - 14.
